# EUROPÄISCHE PATENTSCHRIFT

(11) **EP 0 733 813 B1**
(45) Veröffentlichungstag und Bekanntmachung des Hinweises auf die Patenterteilung: **13.10.1999**
(21) Anmeldenummer: 96810007.3
(22) Anmeldetag: 08.01.1996
(51) Int. Cl.: F16B 13/12

(54) **Spreizdübel**
Expanding dowel
Cheville à expansion

(30) Priorität: 22.03.1995 DE 19510306
(43) Veröffentlichungstag der Anmeldung: 25.09.1996
(73) Patentinhaber: HILTI Aktiengesellschaft, 9494 Schaan (LI)
(72) Erfinder: Loose, Rainer, D-87616 Marktoberdorf (DE)
(74) Vertreter: Wildi, Roland

(56) Entgegenhaltungen:
- DE-A- 2 240 061
- DE-A- 3 205 928
- DE-A- 4 007 088
- DE-A- 4 020 402
- DE-A- 4 305 381
- DE-A- 4 321 300

## Beschreibung

Die Erfindung betrifft einen Spreizdübel mit einer zylindrischen Spreizhülse, die einen Spreizbereich mit Längsschlitzen bzw. Brechnuten aufweist und eine sich in Setzrichtung konisch verjüngende zentrale Bohrung aufweist, die zur Aufnahme eines Spreizkörpers ausgebildet ist.

Spreizdübel der gattungsgemässen Art sind ausserordentlich stark verbreitet. Sie finden in Gestein, Beton, Mauerwerk und dergleichen Aufnahmematerialien Anwendung. Aus der DE-A-43 05 381 ist beispielsweise ein Spreizdübel bekannt, der einen radial verformbaren Spreizkörper aufweist. Auf diese Weise soll einer Überbeanspruchung des Aufnahmematerials beim Aufspreizen der Spreizhülse entgegengewirkt werden. Ein in eine Bohrung im Spreizkörper eintreibbarer Zapfen soll die radiale Verformbarkeit des Spreizkörpers begrenzen.

Während die gattungsgemässen Spreizdübel in intaktem Aufnahmematerial sehr gute Haltewerte besitzen, können diese jedoch bei Rissbildung unter statischer Belastung stark herabgesetzt sein. Insbesondere bei Linienrissen im Aufnahmematerial, beispielsweise in Beton, kann es vorkommen, dass die Gegenkraft des Aufnahmematerials nachlässt und sich der konische Spreizkörper in der Spreizhülse entgegen der Setzrichtung verschiebt. Die Folge davon ist ein Verlust an Spreizdruck des Spreizdübels, was zu deutlich reduzierten Haltewerten führt und im schlimmsten Fall bis zum Versagen des Befestigungspunktes führen kann.

Aufgabe der vorliegenden Erfindung ist es daher, einen Spreizdübel der gattungsgemässen Art dahingehend zu verbessem, dass auch in Aufnahmematerialien mit Rissen ausreichende Haltewerte erreicht werden. Insbesondere soll verhindert werden, dass der Spreizdruck des Spreizdübels derart herabgesetzt wird, dass es zu einem Versagen des Befestigungspunktes führen kann.

Die Lösung dieser Aufgaben besteht in einem Spreizdübel, der die im kennzeichnenden Teil des Patentanspruchs 1 angeführten Merkmale aufweist. Insbesondere wird durch die Erfindung ein Spreizdübel mit einer zylindrischen Spreizhülse geschaffen, welche einen Spreizbereich mit Längsschlitzen bzw. Brechnuten aufweist und eine sich in Setzrichtung konisch verjüngende zentrale Bohrung besitzt, die zur Aufnahme eines Spreizkörpers ausgebildet ist. Der Spreizkörper grenzt mit seiner der Setzrichtung abgewandten Stimseite an ein Sicherungselement gegen axiales Verschieben an, dessen Umfang mit Hilfe eines in Setzrichtung vortreibbaren, einen im wesentlichen konischen Bereich aufweisenden Zapfens vergrösserbar ist. Der Spreizkörper ist zur Aufnahme wenigstens eines setzrichtungsseitigen vorderen Bereiches des Zapfens ausgebildet. Durch die erfindungsgemässe Ausbildung des Spreizdübels mit einem an den Spreizkörper angrenzenden Sicherungselement ist der Spreizkörper gegen ein axiales Verschieben sicherbar. Das Sicherungselement ist mit Hilfe eines wenigstens bereichsweise konischen Zapfens während des Setzvorgangs des Spreizdübels im Umfang aufweitbar. Durch die Umfangsvergrösserung wird das Sicherungselement innerhalb der zentralen Bohrung der Spreizhülse verspreizt. Dabei ist der Spreizkörper derart ausgebildet, dass er wenigstens einen setzrichtungsseitigen vorderen Bereich des Zapfens aufnehmen kann. Auf diese Weise ist gewährleistet, dass das Sicherungselement im Kontakt mit der der Setzrichtung abgewandten Stimseite des Spreizkörpers bleibt. Das aufgespreizte Sicherungselement verhindert, dass der Spreizkörper sich innerhalb der Spreizhülse in Richtung eines geringeren Spreizdrucks verschiebt. Dadurch können auch bei Aufnahmematerialien mit Rissen, beispielsweise sich öffnenden und wieder schliessenden Längs rissen, ausreichende Haltewerte erreicht werden. Der Verlust an Spreizdruck ist nur gering, ein Versagen des Befestigungspunktes kann unterbunden werden.

In einer bevorzugten und einfach herstellbaren Ausführungsvariante ist das Sicherungselement ein Spreizring, dessen Durchmesser im ungespreizten Zustand gleich dem oder nur unwesentlich kleiner als der Durchmesser der benachbarten Stimseite des Spreizkörpers ist. Entlang seines Umfangs weist der Spreizring eine Sollbruchstelle auf bzw. ist er durch einen Schlitz unterbrochen. Die Durchmesser des Spreizrings und des Spreizkörpers stimmen im wesentlichen überein. Dadurch können beim Setzen des Spreizdübels beide Teile gemeinsam in der zentralen Bohrung der Spreizhülse vorgetrieben werden. Auf diese Weise bleibt der Spreizring in unmittelbarer Nachbarschaft des Spreizkörpers und wird schliesslich dort aufgespreizt. Dadurch wird der Spreizkörper in der Spreizhülse gegen ein Zurückgleiten gesichert.

In einer besonders vorteilhaften Ausführungsvariante der Erfindung ist der Spreizkörper mit einem Sackloch versehen, welches sich von der an dem Sicherungselement anliegenden Stimseite über einen Teil seiner Längserstreckung in Setzrichtung fortsetzt. Anstelle eines Sacklochs kann der Spreizkörper auch mit einer Durchgangsbohrung ausgestattet sein. Das Sackloch bzw. die Durchgangsbohrung dient der Aufnahme wenigstens des vorderen Bereichs des Zapfens, mit dem der Spreizring aufgeweitet wird. Auf diese Weise wird der Spreizring nicht vom Spreizkörper weggedrückt, sondern bleibt in unmittelbarer Anlage damit.

Die Geometrie des Sackloches bzw. der Durchgangbohrung im Spreizkörper und des Zapfens sind bevorzugt geometrisch derart ausgebildet, dass der Zapfen unverlierbar in dem Sackloch bzw. in der Durchgangsbohrung gehalten ist. Auf diese Weise kann der Spreizdübel in vorbereitetem Zustand gelagert werden, ohne befürchten zu müssen, dass der Zapfen verlorengeht.

Um zuverlässig zu verhindern, dass das Sicherungselement für den Spreizkörper während des Setzvorgangs des Spreizdübels zu früh aufgespreizt wird, und um eine Verschiebung des Zapfens sicherzustellen, sind Mittel vorgesehen, die gewährleisten, dass der Zapfen erst gegen Ende des Spreizvorgangs der Spreizhülse in seine Endposition vorgetrieben wird. In einer vorteilhaften Variante der Erfindung umfassen die Mittel eine Stufe in der zentralen Bohrung der Spreizhülse, gegen welche der Spreizkörper am Ende des Spreizvorgangs anläuft. Dadurch ist sichergestellt, dass der Spreizring nicht zu früh aufgeweitet wird, andererseits wird dadurch der Zapfen in jedem Fall beim weiteren Vortreiben des Setzwerkzeugs in Setzrichtung verschoben.

Mit oder ohne Stufe in der Bohrung der Spreizhülse sind die Durchmesser des vorderen Bereich des Zapfens und des Sacklochs bzw. der Durchgangsbohrung derart aufeinander abgestimmt, dass der Reibungswiderstand zwischen dem Zapfen und der Innenwandung des Sacklochs bzw. der Durchgangsbohrung während des grössten Teils des Setzvorgangs grösser ist als der Reibungswiderstand zwischen der Innenwandung der Spreizhülse und dem Spreizkörper. Die Dimensionierung ist insbesondere derart gewählt, dass sich die Reibungswiderstandsverhältnisse erst gegen Ende des Setzvorgangs umkehren.

Die Spreizwirkung durch den Spreizkörper kann noch verstärkt werden bzw. insbesondere in der Variante mit einer Durchgangsbohrung auch dosiert werden, indem der Spreizkörper durch das Vortreiben des Zapfens in das Sackloch bzw. in die Durchgangsbohrung aufweitbar ist. Dadurch kann einer radialen Verformung des Spreizkörpers, die in einem gewissen Mass für einen Abbau übermässigen Spreizdrucks auf das Aufnahmematerial erwünscht ist, entgegengewirkt werden, um bei bestmöglicher Schonung des Aufnahmematerials immer noch einen ausreichenden Spreizdruck zu erreichen.

Um eine möglichst gleichmässige Übertragung der Spreizkräfte auf die Spreizhülse und auf das Aufnahmematerial zu erreichen, sind der Zapfen und die Sacklochbohrung bzw. die Durchgangsbohrung zum Spreizkörper zentral angeordnet.

Obwohl die erfindungsgemässe Ausbildung des Spreizdübels prinzipiell auch für Kunststoffdübel geeignet ist, bei denen der Spreizkörper, das Sicherungselement und der Zapfen aus Kunststoff oder aus Metall sind, ist eine Ausführungsvariante, bei der alle Elemente aus Metall sind bevorzugt, da diese die besten Haltewerte erreicht.

Im folgenden wird die Erfindung unter Bezugnahme auf die beispielsweise dargestellten Ausführungsvarianten näher erläutert. In den schematischen Darstellungen zeigen:
- Fig. 1: einen teilweisen Axialschnitt eines ersten Ausführungsbeispiel des erfindungsgemässen Spreizdübels im ungespreizten Zustand,
- Fig. 2: den Spreizdübel aus Fig. 1 im gespreizten Zustand und
- Fig. 3: einen teilweisen Axialschnitt eines zweiten Ausführungsbeispiels des erfindungsgemässen Spreizdübels.

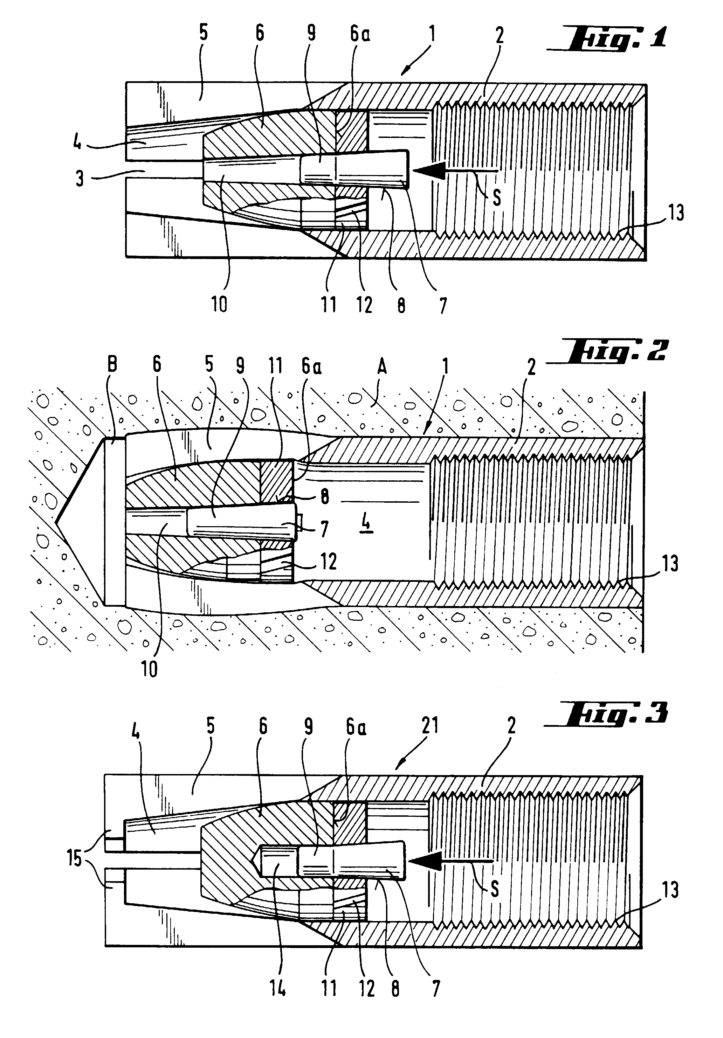

Ein erstes Ausführungsbeispiel des erfindungsgemässen Spreizdübels ist in Fig. 1 und Fig. 2 jeweils gesamthaft mit dem Bezugszeichen 1 versehen. Der Spreizdübel 1 umfasst eine zylindrische Spreizhülse 2, die einen Spreizbereich 5 mit Längsschlitzen 3 bzw. Brechnuten aufweist. Die Spreizhülse 2 ist mit einer sich in Setzrichtung, die durch den Pfeil S symbolisiert ist, verjüngenden zentralen Bohrung 4 versehen. Die Bohrung 4 ist zu Aufnahme eines konusförmigen Spreizkörpers 6 ausgebildet. Die der Setzrichtung S abgewandte Stirnfläche 6a des Spreizkörpers 6 grenzt an einen Spreizring 11 an. Der Spreizring 11 ist mit Hilfe eines Zapfens 7 bezüglich ihres Umfangs aufweitbar. Der Zapfen 7 weist zu diesem Zweck einen konischen Bereich 8 auf, der sich entgegen der Setzrichtung S im Durchmesser derart vergrössert, dass er beim Eintreiben durch die zentrale Bohrung des Spreizrings 11 diesen aufspreizt. Im ungespreizten Zustand entspricht der Aussendurchmesser des Spreizrings 11 etwa dem Durchmesser der angrenzenden Stirnfläche 6a des Spreizkörpers 6 bzw. er ist nur geringfügig kleiner. Der Spreizring 11 weist an seinem Umfang einen Schlitz 12 auf, der erlaubt, dass sich der Spreizring 11 beim Eintreiben des Zapfens 7 in Setzrichtung S aufweitet. Anstelle eines Schlitzes kann auch eine Sollbruchstelle vorgesehen sein.

Der Spreizkörper 6 ist mit einer Durchgangsbohrung 10 ausgestattet, die ein Eindringen wenigstens des setzrichtungsseitigen vorderen Bereichs 9 des Zapfens 7 erlaubt. Die Abmessungen des vorderen Bereichs 9 des Zapfens 7 und der Durchgangsbohrung 10 sind derart bemessen, dass der Zapfen 7 unverlierbar in der Durchgangsbohrung 10 gehalten ist. Insbesondere sind die Durchmesser der Durchgangsbohrung 10 und des vorderen Bereichs 9 des Zapfens 7 derart aufeinander abgestimmt, dass der Reibungswiderstand zwischen der Innenwandung der Durchgangsbohrung 10 und dem Zapfen 7 während des grössten Teils des Setzvorgangs grösser ist als der Widerstand, den die aneinander anliegenden Flächen der Innenwandung der Spreizhülse 2 und des Spreizkörpers 6 dem Verschieben des Spreizkörpers 6 in Setzrichtung S entgegensetzen. Auf diese Weise wird erst gegen Ende des Setzvorgangs der Zapfen 7 in seine Endposition vorangetrieben.

In Fig. 2 ist der erfindungsgemässe Spreizdübel 1 im gesetzten Zustand innerhalb eines Bohrlochs B in einem Aufnahmematerial A, beispielsweise Beton, dargestellt. Der Spreizkörper 6 ist in seine Endposition "Vollverspreizung" vorgetrieben. Der Spreizbereich 5 der Spreizhülse 2 ist aufgeweitet und gegen die Wandung des Bohrlochs B gepresst. Wie in der Darstellung angedeutet, weist der Spreizring 11 gegenüber der angrenzenden Stimseite 6a des Spreizkörpers 6 einen erweiterten Aussendurchmesser auf und sichert auf diese Weise den Spreizkörper 6 gegen ein Verschieben in Richtung geringeren Spreizdrucks, das heisst entgegen der Setzrichtung S. Der die Höhe des Spreizrings 11 überragende Teil des Zapfens 7 ist von der Durchgangbohrung 10 aufgenommen. Die Durchgangsbohrung 10 im Spreizkörper 6 ist bevorzugt in Setzrichtung S verjüngt ausgebildet. Dies zusammen mit der wenigstens bereichsweisen 8 konischen Ausbildung des Zapfens 7 erlaubt es, den Spreizkörper 6 beim Vortreiben des Zapfens 11 in die Durchgangsbohrung 10 geringfügig aufzuweiten. In dem der Setzrichtung S abgewandten Ende weist die Spreizhülse 2 ein Angriffsmittel auf, welches im dargestellten Ausführungsbeispiel in Form eines Innengewindes 13 ausgebildes ist.

Das in Fig. 3 dargestellte zweite Ausführungsbeispiel des erfindungsgemässen Spreizdübels ist in der Darstellung gesamthaft mit dem Bezugszeichen 21 versehen. Es entspricht im wesentlichen dem in Fig. 1 und 2 dargestellten Spreizdübel 1. Der wesentliche Unterschied besteht zum einen darin, dass der Spreizkörper 6 anstelle einer Durchgangsbohrung 10 ein Sackloch 14 aufweist. Das Sackloch 14 ist zur Aufnahme des setzrichtungsseitigen vorderen Bereichs 9 des Zapfens 7 ausgebildet. Der zweite Unterschied besteht darin, dass die zentrale Bohrung 4 der Spreizhülse 2 im vordersten Bereich der Spreizhülse 2 eine Stufe 15 aufweist. Beim Setzvorgang wird der Spreizkörper 6 gemeinsam mit dem Spreizring 11 und dem Zapfen 7 von einem Setzwerkzeug vorangetrieben. Am Ende des Setzvorgangs läuft der Spreizkörper 6 gegen die Stufe 15 an und wird von Ihr am weiteren Verschieben gehindert. Dadurch wird in weiterer Folge der Zapfen 7 vorgetrieben, wobei der Spreizring 11 aufgeweitet wird.

Im folgenden wird der Setzvorgang des erfindungsgemässen Spreizdübels 1 bzw. 21 am Beispiel von niederfestem und hochfestem Beton als Aufnahmematerial A beschrieben. Beim Setzen des Spreizdübels in niederfesten Beton lässt sich der Spreizkörper 6 mit dem Setzwerkzeug nahezu in seine Endposition "Vollverspreizung" bringen, ohne dass der Zapfen 11 seine Lage verändert. Erst gegen Ende des Spreizvorgangs wird der Zapfen 7 in die Durchgangsbohrung 10 bzw. in das Sackloch 14 eingetrieben. Dies erfolgt entweder weil der Spreizkörper 6 gegen eine Stufe 15 anläuft oder weil sich die Reibungswiderstandverhältnisse umkehren. Dabei wird der Spreizring 11 aufgeweitet und gegen die Innenwandung der zentralen Bohrung 4 der Spreizhülse 2 gepresst. Die Innenwandung kann profiliert ausgebildet sein, um die Haftung des aufgeweiteten Spreizrings 11 noch zu verbessern.

In hochfestem Beton wird der Spreizkörper 6 mit dem Setzwerkzeug, je nach Höhe der Betonfestigkeit, in eine Position vorgetrieben, die oberhalb der Endposition "Vollverspreizung" liegt. Während dieses Vorgangs kann der Zapfen bereits geringfügig in das Sackloch 14 bzw. in die Durchgangsbohrung 10 eingetrieben werden. Zwar wird dadurch der Spreizring 11 bereits geringfügig aufgeweitet, jedoch behindert dies das Eintreiben des Spreizkörpers 6 nicht weiter. Erst nachdem der Spreizkörper 6 seine Endposition erreicht hat, wird der Zapfen 7 weiter in das Sackloch 14 oder die Durchgangsbohrung 10 vorgeschoben. Erst dabei wird der Spreizring 11 im gewünschten Ausmass aufgeweitet. Bei einem Spreizkörper 6 mit Sackloch 14 wird zunächst der setzrichtungsseitige vordere Bereich 9 des Zapfens 7 in das Sackloch 14 eingeschlagen bis er am Grund des Sacklochs 14 ansteht. Anschliessend wird der die Höhe des Spreizrings 11 überragende Bereich 8 des Zapfens 7 deformiert, bis die Schulter des Setzwerkzeugs am Bund der Spreizhülse anliegt.

Der erfindungsgemässe Spreizdübel ist bevorzugt vollständig aus Metall.

Die erfindungsgemässe Ausbildung des Spreizdübels mit einem Sicherungselement gegen unbeabsichtigtes axiales Verschieben des Spreizkörpers verhindert, dass der Spreizkörper sich innerhalb der Spreizhülse in Richtung geringeren Spreizdrucks verschiebt. Dadurch können auch bei Aufnahmematerialien mit Rissen, beispielsweise sich öffnenden und wieder schliessenden Längsrissen, ausreichende Haltewerte erreicht werden. Der Verlust an Spreizdruck ist nur gering, ein Versagen des Befestigungspunktes kann unterbunden werden.

## Patentansprüche

1. Spreizdübel mit einer zylindrischen Spreizhülse (2), die einen Spreizbereich (5) mit Längsschlitzen (3) bzw. Brechnuten aufweist und eine sich in Setzrichtung (S) konisch verjüngende zentrale Bohrung (4) besitzt, die zur Aufnahme eines Spreizkörpers (6) ausgebildet ist, **dadurch gekennzeichnet,** dass der Spreizkörper (6) mit seiner der Setzrichtung (S) abgewandten Stimseite (6a) an ein Sicherungselement (11) gegen axiales Zurückgleiten des Spreizkörpers angrenzt, dessen Umfang mit Hilfe eines in Setzrichtung (S) vortreibbaren, einen im wesentlichen konischen Bereich (8) aufweisenden Zapfens (7) vergrösserbar ist, und dass der Spreizkörper (6) zur Aufnahme wenigstens eines setzrichtungsseitigen vorderen Bereiches (9) des Zapfens (7) ausgebildet ist.

2. Vorrichtung nach Anspruch 1, dadurch gekennzeichnet, dass das Sicherungselement (7) ein Spreizring ist, dessen Durchmesser im ungespreizten Zustand gleich dem oder nur unwesentlich kleiner als der Durchmesser der benachbarten Stimseite (6a) des Spreizkörpers (6) ist und der entlang des Umfangs eine Sollbruchstelle aufweist bzw. durch einen Schlitz (12) unterbrochen ist.

3. Vorrichtung nach Anspruch 1 oder 2, dadurch gekennzeichnet, dass der Spreizkörper (6) mit einem Sackloch (14), welches sich von der an dem Sicherungselement (11) anliegenden Stimseite (6a) über einen Teil seiner Längserstreckung in Setzrichtung (S) fortsetzt, oder mit einer Durchgangsbohrung (10) versehen ist.

4. Vorrichtung nach Anspruch 3, dadurch gekennzeichnet, dass der Zapfen (7) unverlierbar in dem Sackloch (14) bzw. in der Durchgangsbohrung (10) gehalten ist.

5. Vorrichtung nach Anspruch 4, dadurch gekennzeichnet, dass Mittel vorgesehen sind, die gewährleisten, dass der Zapfen (7) erst gegen Ende des Spreizvorgangs der Spreizhülse (2) in seine Endposition vorgetrieben wird.

6. Vorrichtung nach Anspruch 5, dadurch gekennzeichnet, dass die Mittel eine Stufe (15) in der zentralen Bohrung (4) der Spreizhülse (2) umfassen, gegen welche der Spreizkörper (6) am Ende des Spreizvorgangs anläuft.

7. Vorrichtung nach Anspruch 5 oder 6, dadurch gekennzeichnet, dass die Durchmesser des vorderen Bereich (8) des Zapfens (7) und des Sacklochs (14) bzw. der Durchgangsbohrung (10) derart aufeinander abgestimmt sind, dass der Reibungswiderstand zwischen dem Zapfen (7) und der Innenwandung des Sacklochs (14) bzw. der Durchgangsbohrung (10) während des grössten Teils des Setzvorgangs grösser ist als der Reibungswiderstand zwischen der Innenwandung der Spreizhülse (2) und dem Spreizkörper (6) und dass sich die Reibungswiderstandsverhältnisse erst gegen Ende des Setzvorgangs umkehren.

8. Vorrichtung nach einem der Ansprüche 3 - 7, dadurch gekennzeichnet, dass der Spreizkörper (6) durch das Vortreiben des Zapfens (7) in das Sackloch (14) bzw. in die Durchgangsbohrung (10) aufweitbar ist.

9. Vorrichtung nach einem der Ansprüche 3 - 8, dadurch gekennzeichnet, dass der Zapfen (7) und die Sacklochbohrung (14) bzw. die Durchgangsbohrung (10) zum Spreizkörper (6) zentral angeordnet sind.

10. Vorrichtung nach einem der vorangehenden Ansprüche, dadurch gekennzeichnet, dass die Spreizhülse (2), der Spreizkörper (6), das Sicherungselement (11) und der Zapfen (7) aus Metall sind.

## Claims

1. Expansion anchor with a cylindrical expansion sleeve (2) having an expansion zone (5) with longitudinal slits (3), or shearing slots, and a central bore (4) which tapers conically in the placement direcLion (S) and which is configured to receive an expansion body (6), characterised in that the end face (6a) of the expansion body (6), facing away from the placement direction (S), adjoins an element (11) locking the expansion body against slipping back axially, the circumference of said expansion body being adapted to be enlarged with the help of a pin (7) which can be driven in the placement direction (S) and features a substantially conical zone (8), and in that the expansion body (6) is configured to receive at least one frontal zone (9), on the placement direction side, of the pin (7).

2. Device according to claim 1, characterised in that the locking element (7) is an expansion ring, the diameter of which in the unexpanded state is the same or only insignificantly smaller than the diameter of the adjoining end face (6a) of the expansion body (6) and which incorporates a predetermined breaking point along the circumference, or is interrupted by a slit (12).

3. Device according to claim 1 or 2, characterised in that the expansion body (6) is provided with a blind hole (4) which continues in the placement direction (S) from the end face (6a) adjoining the locking element (11) and over part of the longitudinal extension thereof, or is provided with a through-hole (10).

4. Device according to claim 3, characterised in that the pin (7) is held in the blind hole (14) or through hole (10), respectively, in such a way that it cannot fall out.

5. Device according to claim 4, characterised in that means are provided which ensure that the pin (7) is only driven into its final position towards the end of the expansion sleeve (2) expansion operation.

6. Device according to claim 5, characterised in that the means include a step (15) in the central bore (4) of the expansion sleeve (2), the expansion body (6) running up against said step at the end of the expansion operation.

7. Device according to claim 5 or 6, characterised in that the diameters of the frontal zone (8) of the pin (7) and of the blind hole (14) or of the through-hole (10), respectively, are matched to one another in such a way that the during the greater part of the placements operation the frictional resistance between the pin (7) and the inner wall of the blind hole (14) or through-hole, respectively, is greater than the frictional resistance between the inner wall of the expansion sleeve (2) and the expansion body (6), and that the frictional resistance ratios are only reversed towards the end of the placement operation.

8. Device according to any of claims 3 to 7, characterised in that the expansion body (6) is adapted to be splayed apart by driving the pin (7) into the blind hole (14) or through-hole (10), respectively.

9. Device according to any of claims 3 to 8, characterised in that the pin (7) and the blind bore (14) or through-hole (10), respectively, are disposed centrally in relation to the expansion body (6).

10. Device according to any of the preceding claims, characterised in chat the expansion sleeve (2), the expansion body (6), the locking element (11) and the pin (7) are made out of metal.

## Revendications

1. Cheville à expansion qui comprend un manchon expansible cylindrique (2) comportant une zone d'expansion (5) pourvue de fentes longitudinales (3) ou de gorges de rupture et un trou central (4) qui se rétrécit sous forme conique dans le sens d'enfoncement (S) et qui est conçu pour loger un corps d'expansion (6), caractérisée en ce que, par sa face frontale (6a) orientée à l'opposé du sens d'enfoncement (S), le corps d'expansion (6) est adjacent à un élément de blocage (11) qui en interdit le recul axial et dont la périphérie peut être agrandie à l'aide d'un pion (7) pouvant être poussé dans le sens d'enfoncement (S) et comportant une zone sensiblement conique (8), et en ce que le corps d'expansion (6) est conçu pour loger au moins une zone (9) du pion (7) située à l'avant par rapport au sens d'enfoncement.

2. Dispositif selon la revendication 1, caractérisé en ce que l'élément de blocage (7) est un anneau expansible dont le diamètre en position de non-expansion est égal ou légèrement inférieur au diamètre de la face frontale voisine (6a) du corps d'expansion (6) et qui, le long de sa périphérie, comporte un emplacement de rupture imposée ou est interrompu par une fente (12).

3. Dispositif selon la revendication 1 ou 2, caractérisé en ce que le corps d'expansion (6) est pourvu d'un trou borgne (14) qui, à partir de la face frontale (6a) appliquée contre l'élément de blocage (11), se prolonge dans le sens d'enfoncement (S) sur une partie de son extension longitudinale, ou est pourvu d'un trou débouchant (10).

4. Dispositif selon la revendication 3, caractérisé en ce que le pion (7) est retenu sans risque de perte dans le trou borgne (14) ou, selon le cas, dans le trou débouchant (10).

5. Dispositif selon la revendication 4, caractérisé en ce qu'il est prévu des moyens qui garantissent que le pion (7) n'est poussé dans sa position finale qu'à la fin du processus d'expansion du manchon d'expansion (2).

6. Dispositif selon la revendication 5, caractérisé en ce que les moyens comprennent un décrochement (15) qui est situé dans le trou central (4) du manchon expansible (2) et contre lequel le corps d'expansion (6) vient en butée à la fin du processus d'expansion.

7. Dispositif selon la revendication 5 ou 6, caractérisé en ce que le diamètre de la zone avant (8) du pion (7) et celui du trou borgne (14) ou, selon le cas, du trou débouchant (10) sont adaptés l'un à l'autre de façon que la résistance due au frottement entre le pion (7) et la paroi intérieure du trou borgne (14) ou, selon le cas, du trou débouchant (10) durant la majeure partie de l'opération de scellement soit supérieure à la résistance due au frottement entre la paroi intérieure du manchon expansible (2) et le corps d'expansion (6), et en ce que les proportions de résistance due au frottement ne s'inversent que vers la fin de l'opération de scellement.

8. Dispositif selon l'une des revendications 3 à 7, caractérisé en ce que le corps d'expansion (6) peut être élargi par l'enfoncement du pion (7) dans le trou borgne (14) ou dans le trou débouchant (10).

9. Dispositif selon l'une des revendications 3 à 8, caractérisé en ce que le pion (7) et le trou borgne (14) ou, selon le cas, le trou débouchant (10) sont centrés par rapport au corps d'expansion (6).

10. Dispositif selon une des revendications précédentes, caractérisé en ce que le manchon expansible (2), le corps d'expansion (6), l'élément de blocage (11) et le pion (7) sont en métal.
